# FASCICULE DE BREVET EUROPEEN

(11) **EP 3 423 786 B1**
(45) Date de publication et mention de la délivrance du brevet: **22.07.2020**
(21) Numéro de dépôt: 17712209.0
(22) Date de dépôt: 01.03.2017
(51) Int. Cl.: G01B 21/32, G01N 3/307

(54) **DISPOSITIF POUR LA MISE EN OEUVRE D'UN TEST DE TRACTION BIAXIALE D'UN MATERIAU**
VORRICHTUNG ZUR DURCHFÜHRUNG EINER BIAXIALEN DEHNUNGSPRÜFUNG EINES MATERIALS
DEVICE FOR CARRYING OUT A BIAXIAL TENSILE TEST ON A MATERIAL

(30) Priorité: 02.03.2016 FR 1600358
(43) Date de publication de la demande: 09.01.2019
(73) Titulaire: Université de Bretagne Sud, 56321 Lorient Cedex (FR)
(72) Inventeur: PENIN, Arnaud, 56100 Lorient (FR); GALPIN, Bertrand, 56000 Vannes (FR); GROLLEAU, Vincent, 29360 CLOHARS CARNOET (FR)
(74) Mandataire: Novagraaf Technologies
(86) Numéro de dépôt international: PCT/FR2017/050464
(87) Numéro de publication internationale: WO 2017/149247

(56) Documents cités:
- GB-A- 1 154 778
- US-A- 3 277 693
- US-A1- 2007 220 966
- SHIM J ET AL: "Using split Hopkinson pressure bars to perform large strain compression tests on polyurea at low, intermediate and high strain rates", INTERNATIONAL JOURNAL OF IMPACT ENGINEERING, PERGAMON, GB, vol. 36, no. 9, 1 septembre 2009 (2009-09-01), pages 1116-1127, XP026127872, ISSN: 0734-743X, DOI: 10.1016/J.IJIMPENG.2008.12.010 [extrait le 2009-05-19]
- V. GROLLEAU ET AL: "Biaxial Testing of Sheet Materials at High Strain Rates Using Viscoelastic Bars", EXPERIMENTAL MECHANICS., vol. 48, no. 3, 29 août 2007 (2007-08-29), pages 293-306, XP055320210, US ISSN: 0014-4851, DOI: 10.1007/s11340-007-9073-5 cité dans la demande

## Description

### 1. Domaine de l'invention.

L'invention s'applique au domaine de l'étude de la déformation des matériaux. Plus particulièrement, l'invention s'applique à l'observation de la déformation des tôles lors d'un test dit « bulge test ».

### 2. Etat de l'art.

Différents types de dispositifs existants servent à l'étude détaillée de la déformation ou de la rupture des matériaux. Ces matériaux sont, à titre d'exemple, des métaux ou des matériaux composites. L'étude de la déformation est parfois complexe et requiert de pouvoir caractériser de façon précise la déformation des pièces, isolément ou dans une structure. Ce type d'analyse correspond par exemple au 'crash test' bien connu et qui sert à prévoir ou définir dans une certaine mesure le comportement des éléments assemblés d'un véhicule. Pris isolément, un élément ou un matériau caractérisé permet de définir des valeurs caractéristiques utiles pour l'utilisation d'un élément dans une ou plusieurs applications. C'est le cas, toujours à titre d'exemple, pour une poutre en métal, des pièces de fixation, des soudures, etc. D'autres analyses de déformation sont utiles et/ou nécessaires à des étapes de conception de produits ou à l'élaboration d'applications comprenant des éléments mécaniques assemblés.

Un essai visant à caractériser la déformation de matériaux, et connu sous le nom usuel de « bulge test » est décrit dans la norme EN ISO 16808 intitulée « Metallic materials - Sheet and strip-Determination of biaxial stress-strain curve by means of bulge test with optical measuring systems. ». Ce document décrit un dispositif comprenant une chambre, encore appelée cellule, seule ou associée à d'autres éléments, pouvant être équipée d'un capteur de pression, et un serre-flan destiné au maintien d'un flan soumis au test. Le flan est la pièce qui subit des contraintes mécaniques et dont la déformation est étudiée selon un ou plusieurs axes. La norme décrit les essais de Bulge test selon un mode opératoire dans un régime quasi-statique. Ce régime quasi-statique correspond à une vitesse de déformation de l'ordre de 0,001 [1/s]. La norme citée recommande une vitesse de déformation de 0,05 [1/s] dans le but de déterminer le comportement mécanique de tôles métalliques sur une grande plage de déformation. Cela permet en outre une localisation diffuse de la déformation au moment où s'amorce le phénomène de striction.

L'utilisation courante de tôles métalliques dans la construction automobile et aéronautique nécessite de prévoir le comportement de tôles lors de crash où les vitesses de déformation sont de l'ordre de 100 à 1000 [1/s]. Ces vitesses de déformation entraînent une augmentation significative de la contrainte développée par le matériau, pour un niveau de déformation donné, par rapport aux essais quasi-statiques à une vitesse de déformation de l'ordre de 0,001 1/s. De surcroît, l'effet sur la valeur de la déformation à rupture, de l'application d'un chargement bi-axial à vitesse de déformation élevée, n'est pas clairement établi et requiert la définition d'un essai plus fiable.

Le document de publication scientifique « Biaxial testing of sheet materials at high strain rates using viscoelastic bar (Exp. Mech, 48 (2008), pp 293-306) traite d'essais de bulge test mettant en œuvre un dispositif comprenant un élément appelé usuellement barre sortante. Ce document indique que la barre sortante sert à mesurer l'onde sortante aux fins de déterminer le déplacement de la cellule du dispositif. Il est décrit dans ce document que la présence de la barre sortante limite malheureusement considérablement l'accès à la surface externe de l'échantillon testé (le flan), notamment pour permettre la réalisation de mesures précises de température ou d'analyser précisément la déformation par imagerie. Le document US2007/0220966 présente un dispositif bulge test avec un système d'observation optique de l'échantillon.

Les bulges tests existants utilisent par ailleurs classiquement un dispositif comprenant une barre d'entrée préférentiellement équipée de jauges de déformation. La barre d'entrée est mise en mouvement par l'impact d'un projectile. Cela requiert d'utiliser une barre d'entrée d'une longueur suffisante pour éviter la superposition des ondes au(x) point(s) de mesure. Cette contrainte engendre des longueurs de l'ordre de dix à trente mètres en fonction de la nature du matériau utilisé pour la barre d'entrée. Il en résulte que, considérant les longueurs alors conséquentes, une première solution connue souvent mise en œuvre consiste à réduire la durée de l'essai avec en conséquence l'absence d'accès à de grandes déformations et notamment celles aboutissant à une rupture. Une seconde solution au problème décrit consiste à augmenter la vitesse de déformation en augmentant la vitesse du projectile pour un montage donné. Cette seconde solution rend difficile le maintien en position de la cellule.

Les dispositifs existants présentent donc des inconvénients parmi lesquels une limitation à une plage étroite de déformations lors d'un tel test.

### 3. Résumé de l'invention.

L'invention permet de résoudre au moins un des inconvénients de l'art antérieur en proposant un dispositif mécanique ou électromécanique configuré pour la réalisation d'un essai de déformation d'un matériau. Le dispositif comprend notamment un piston et/ou une barre d'entrée, une cellule comprenant une chambre, et un élément matrice de maintien d'un flan (échantillon) à déformer lors du test.

Avantageusement, la cellule du dispositif a une masse supérieure à une valeur seuil prédéterminée, cette masse étant de l'ordre de 15 à 25 kg et est solidaire d'un ou plusieurs éléments d'appui adaptés à faire pression chacun sur un amortisseur configuré pour absorber une partie de l'énergie reçue via le piston et/ou la barre d'entrée.

En outre, et de façon surprenante, le dispositif ne comprend pas d'élément mécanique de type « barre sortante » adapté à transmettre tout ou partie de l'énergie reçue, à partir du flan échantillon, dans un prolongement longitudinal de la chambre, et du côté opposé de la chambre par rapport au piston et/ou à la barre d'entrée.

Selon un mode de réalisation de l'invention, le dispositif comprend en outre un élément glissière, solidaire d'au moins un élément d'appui, adapté à un coulissement dans un élément périphérique de la chambre.

Avantageusement, l'utilisation d'un dispositif selon l'invention autorise ou simplifie grandement la mesure de déformation par imagerie sur la face externe du flan déformé, du fait de l'absence de barre sortante représentant un obstacle conséquent à l'accès à la surface externe du flan déformé lors de l'essai.

Avantageusement encore, l'utilisation d'un dispositif selon l'invention permet d'accroître la durée d'essai aux fins d'étudier une déformation pouvant aller jusqu'à une rupture du flan, sous chargement bi-axial, et pour une plage accrue de vitesses de déformation.

En outre, un dispositif réalisé selon l'invention met à disposition un ensemble matrice et chambre identique pour des essais quasi-statiques et pour des essais dynamiques, évitant ainsi tout effet de bloc entre ces deux gammes de vitesses.

### 4. Liste des figures.

L'invention sera mieux comprise, et d'autres particularités et avantages apparaîtront à la lecture de la description qui va suivre, la description faisant référence aux dessins annexés parmi lesquels :
- la figure 1 représente un dispositif pour la mise en œuvre d'un test de déformation « bulge test » selon l'art antérieur.
- la figure 2 représente un dispositif pour la mise en œuvre d'un test de déformation « bulge test » selon un mode particulier et non limitatif de l'invention.

### 5. Description détaillée de modes de réalisation de l'invention.

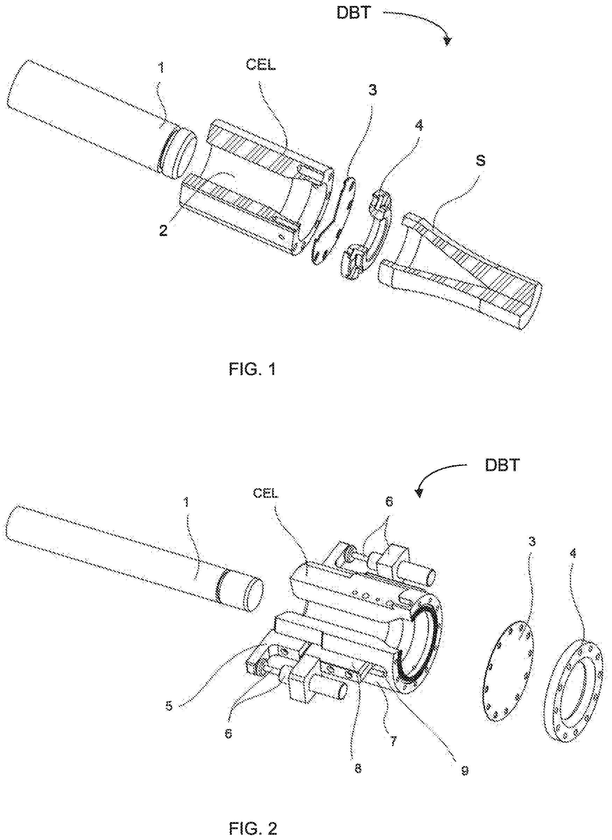

La **figure 1** représente un dispositif DBT pour la mise en œuvre d'un test de déformation « bulge test » selon l'art antérieur. Le dispositif CBT comprend une cellule CEL comprenant une chambre 2 configurée pour contenir un liquide, tel que par exemple de l'eau. Une barre d'entrée 1 est agencée de sorte à être partiellement introduite dans la chambre 2, aux fins de communiquer un effort qui lui est apposé au liquide contenu dans la chambre 2, et donc par voie de conséquence au flan 3 à tester. La barre d'entrée 1, déplacée sous l'effet de la contrainte qui lui est apposée par un élément extérieur, autorise la propagation d'une force et/ou d'une onde de choc au liquide contenu dans la chambre 2. Le liquide, tel que l'eau, répartit l'effort ainsi transmis via la barre d'entrée 2 sur l'échantillon de métal 3, encore appelé « flan » à tester. L'échantillon 3 est maintenu en position contre la cellule CEL dont la chambre 2 par un élément de maintien. La barre de sortie S est un élément mécanique positionné contre la matrice de maintien 4 et adaptée à absorber l'énergie cinétique d'entrée transmise dans l'ensemble du système (dispositif) CBT et initialement apportée via la barre d'entrée 1. La longueur de la barre d'entrée 1 est définie de sorte que l'onde de choc incidente et l'onde de choc réfléchie ne perturbent pas conjointement les mesures et analyses en déformation réalisables au moyen du dispositif CBT. Le dispositif CBT peut comprendre un ou plusieurs capteurs de force, tel que, par exemple une jauge de déformation, pour procéder à des mesures précises des différentes contraintes mécaniques subies par les différents éléments du système CBT mis en œuvre. Ainsi la barre d'entrée 1 peut comprendre une ou plusieurs jauges connectées à un ou plusieurs modules de traitement du signal. De la même façon, la cellule CEL, la chambre 2 ou la barre de sortie S peuvent être équipées de capteurs de types différents (jauge de déformation, capteurs piezzo-électriques, ou des équivalents), connectés à un ou plusieurs modules de calculs. La présence de la barre de sortie S limite cependant très conséquemment un accès à l'échantillon 3 en cours de test, et particulièrement un accès visuel par une caméra ou micro-caméra disposée en vue d'une analyse courante ou différée de la déformation du flan testé en déformation, notamment en utilisant le principe d'un visionnage à une vitesse ralentie, ou encore en couplant une prise de vue à un logiciel d'analyse d'images.

La **figure 2** représente un dispositif DBT pour la mise en œuvre d'un test de déformation « bulge test » selon un mode particulier et non limitatif de l'invention.

Astucieusement, le dispositif DBT selon l'invention diffère de celui selon l'art antérieur en ce que sa cellule CEL est dimensionnée pour être conséquemment alourdie. Selon le mode de réalisation préféré de l'invention, la cellule CEL a une masse comprise entre 15 et 25 kg. Ce dimensionnement, qui confère à la cellule une inertie considérablement accrue est opéré soit par un ajout de matière (taille plus importante), soit par le choix d'un ou plusieurs matériaux plus denses, soit en couplant ces deux méthodes d'alourdissement. En outre, la cellule CEL est solidaire d'un élément d'appui 5, adapté à prendre appui sur un ou plusieurs amortisseurs 6, fixés sur un socle, lequel socle maintient l'ensemble de la cellule tout en la laissant libre de se déplacer en translation, selon l'axe longitudinal du dispositif, et ce dans une certaine mesure. Ainsi, l'onde de choc en entrée, apportée par la barre d'entrée 1, est partiellement absorbée par la cellule CEL, le ou les amortisseurs 6 et le flan 3, sous l'effet du déplacement en translation de la cellule CEL. Selon le mode de réalisation préféré de l'invention, les amortisseurs 6 sont des amortisseurs à piston. Selon une variante, les amortisseurs sont des ressorts utilisés en compression. Selon une autre variante, les amortisseurs 6 sont des amortisseurs à lame. Peu importe la nature et la structure des amortisseurs utilisés, leur fonction principale consiste à absorber une partie de l'énergie cinétique entrante via la barre d'entrée 1, et de transmettre le reste de l'énergie au flanc que constitue l'échantillon de métal testé 3 maintenu en position grâce à l'élément de maintien ou de fixation 4. Ainsi, l'énergie qui était absorbée par la barre de sortie S dans, les dispositifs selon l'état de l'art, est ici astucieusement absorbée par le flan et les amortisseurs 6 qui transforment l'énergie mécanique en chaleur dissipée, par exemple. Avantageusement, une telle absorption permet de travailler en déformation à des vitesses autres que celles accessibles selon un dispositif de l'art antérieur, avec un seul et même dispositif (le dispositif selon l'invention), et une barre d'entrée de longueur modérée, tout en fournissant une qualité de mesure et d'analyse suffisante. Un autre avantage conséquent est que, en l'absence de barre de sortie S, il est simple et toujours possible de positionner une ou plusieurs caméras opérant à une vitesse de captation prédéterminée et permettant ensuite une analyse image par image de la séquence de déformation de l'échantillon 3, ou encore simplement d'avoir un accès aisé pour une lecture visuelle ou pour positionner des capteurs de déformation, le cas échéant.

Du fait de la structure spécifique du dispositif DBT, les mesures peuvent être effectuées sur une plage conséquemment accrue de vitesses de déformation, avec le seul dispositif DBT.

L'invention ne se limite pas au seul mode de réalisation décrit, mais concerne tout type de dispositif mettant en œuvre une déformation d'un échantillon de métal, positionné entre une cellule emplie d'un liquide et maintenue en position par un élément de maintien, et configurée pour que la masse de la cellule soit comprise entre 15 et 25 kg, ces deux valeurs limitent étant comprises dans l'intervalle, la cellule ayant au moins un doigt d'appui associé à au moins un élément amortisseur destiné à absorber une énergie cinétique.

Selon le mode de réalisation préféré, la cellule CEL comprend un élément 7 périphérique à la chambre 2 équipé d'une glissière 9 dans laquelle peut coulisser un guide en translation « élément glissière » 8, autorisant un déplacement en translation de la cellule CEL. Ce déplacement est limité en translation selon l'axe longitudinal de l'ensemble du dispositif, par le ou les amortisseurs 6. L'élément glissière 8, guide positionné dans la fente glissière 9 de l'élément périphérique 7, est solidaire d'un socle de maintien de l'ensemble CEL, non représenté. L'ensemble de la cellule CEL peut donc se déplacer en translation, par le guidage de l'élément 8, fixe en référence à un support dans la fente glissière 9 périphérique à la cellule CEL déplacée. Avantageusement, il est possible d'opérer des tests de déformation sur une plage de vitesse de déplacement de la barre d'entrée beaucoup plus large que par le biais d'un système selon l'art antérieur.

## Revendications

1. Dispositif mécanique ou électromécanique (DBT) configuré pour la réalisation d'un essai de type "bulge test" de déformation d'un échantillon de matériau, le dispositif (DBT) comprenant un piston et/ou une barre d'entrée (1), une cellule (CEL), elle-même comprenant une chambre (2) configurée pour contenir un liquide, un élément matrice de maintien (4) dudit échantillon appelé "flan" (3) à déformer,
• ladite cellule (CEL) ayant une masse supérieure à une valeur seuil prédéterminée,
• le dispositif (DBT) étant dépourvu d'élément mécanique de type barre sortante adapté à transmettre tout ou partie de l'énergie reçue par propagation d'une force et/ou d'une onde de choc à travers ledit liquide et répartie sur ledit flan, dans un prolongement longitudinal de ladite chambre (2), et du côté opposé de la chambre par rapport audit piston et/ou à ladite barre d'entrée (1),
ledit dispositif (DBT) étant **caractérisé en ce que**:
ladite cellule (CEL) est solidaire d'au moins un élément d'appui (5) adapté à faire pression sur un amortisseur (6) configuré pour absorber une partie de l'énergie reçue via ledit piston et/ou ladite barre d'entrée (1).

2. Dispositif mécanique ou électromécanique (DBT) selon la revendication 1, **caractérisé en ce qu'**il comprend en outre un élément glissière (8) solidaire d'un élément de fixation et adapté à un coulissement dans un élément périphérique (7) à ladite chambre (2) de la cellule (CEL).

3. Dispositif mécanique ou électromécanique (DBT) selon l'une quelconque des revendications 1 et 2, **caractérisé en ce que** ladite valeur seuil prédéterminée est égale à 15 kg.

## Patentansprüche

1. Mechanische oder elektromechanische Vorrichtung (DBT), die für die Ausführung einer Verformungsprüfung vom Typ "Bulge Test" einer Materialprobe konfiguriert ist, wobei die Vorrichtung (DBT) einen Kolben und/oder eine Eingangsstange (1), eine Zelle (CEL), ihrerseits eine Kammer (2) umfassend, welche dafür konfiguriert ist, eine Flüssigkeit zu enthalten, ein Matrizenelement zum Halten (4) der als "Rohling" (3) bezeichneten, zu verformenden Probe umfasst,
- wobei die Zelle (CEL) eine Masse aufweist, die größer ist als ein vorbestimmter Schwellenwert,
- wobei die Vorrichtung (DBT) kein mechanisches Element vom Typ Ausgangsstange enthält, das dazu geeignet ist, die ganze oder einen Teil der Energie, die durch Ausbreitung einer Kraft und/oder einer Stoßwelle durch die Flüssigkeit empfangen und auf den Rohling verteilt wird, in einer Längsverlängerung der Kammer (2) und auf der in Bezug auf den Kolben und/oder die Eingangsstange (1) gegenüberliegenden Seite der Kammer zu übertragen,
wobei die Vorrichtung (DBT) **dadurch gekennzeichnet ist, dass**:
die Zelle (CEL) mit mindestens einem Auflageelement (5) fest verbunden ist, das dazu geeignet ist, Druck auf einem Dämpfer (6) auszuüben, der dafür konfiguriert ist, einen Teil der über den Kolben und/oder die Eingangsstange (1) empfangenen Energie zu absorbieren.

2. Mechanische oder elektromechanische Vorrichtung (DBT) nach Anspruch 1, **dadurch gekennzeichnet, dass** sie weiter ein Schieberelement (8) umfasst, das fest mit einem Befestigungselement verbunden und für ein Gleiten in einem Umfangselement (7) an der Kammer (2) der Zelle (CEL) geeignet ist.

3. Mechanische oder elektromechanische Vorrichtung (DBT) nach einem der Ansprüche 1 und 2, **dadurch gekennzeichnet, dass** der vorbestimmte Schwellenwert gleich 15 kg beträgt.

## Claims

1. A mechanical or electromechanical device (DBT) configured to carry out a test of the "bulge test" type of deformation of a material sample, the device (DBT) comprising a piston and/or an input bar (1), a cell (CEL), in turn comprising a chamber (2) configured to contain a liquid, a die element (4) for holding said sample called "blank" (3) to be deformed,
- said cell (CEL) having a mass greater than a predetermined threshold value,
- the device (DBT) being devoid of a mechanical element of the extending bar type adapted to transmit all or part of the energy received by propagation of a force and/or a shock wave through said liquid and distributed over said blank, in a longitudinal continuation of said chamber (2), and on the opposite side of the chamber relative to said piston and/or to said input bar (1),
said device (DBT) being **characterised in that**:
said cell (CEL) is integral with at least one bearing element (5) adapted to put pressure on a damper (6) configured to absorb part of the energy received via said piston and/or said input bar (1).

2. The mechanical or electromechanical device (DBT) according to claim 1, **characterised in that** it further comprises a slide element (8) integral with a fastening element and adapted for sliding in an element peripheral (7) to said cell (CEL) chamber (2).

3. The mechanical or electromechanical device (DBT) according to any one of claims 1 and 2, **characterised in that** said predetermined threshold value is equal to 15 kg.
